# EUROPEAN PATENT APPLICATION

(11) **EP 2 924 824 A1**
(43) Date of publication of application: **30.09.2015**
(21) Application number: 15159295.3
(22) Date of filing: 16.03.2015
(51) Int. Cl.: H02B 11/04

(54) **Terminal for connecting busbars**

(30) Priority: 27.03.2014 IT MI20140119 U
(71) Applicant: ABB S.p.A., 20124 Milano (IT)
(72) Inventor: Valsecchi, Davide, 20831 Seregno (MB) (IT); Nava, Giuseppe, 22037 Pontelambro (CO) (IT)
(74) Representative: De Santis, Giovanni

(57) **Abstract**

A terminal for the connection to bus bars suitable for installation within an electrical switchboard cabinet. The terminal comprises a conductive body having a slot comprising:
- a bottom portion;
- a first side portion and a second side portion that protrude transversely from the bottom portion, spaced apart and facing each other; and
- an opening facing the bottom portion, through which a first bus bar can be inserted along the slot.

The first bus bar comprises at least a first face and a second face which are spaced apart by a first thickness. The first side portion and the second side portion comprise a first surface and a second surface, respectively, suitable for contacting the first face and the second face, respectively, in order to clamp the first bus bar.

At least a second bus bar can be inserted along the slot through the opening; such a second bus bar comprising at least a third face and a fourth face spaced apart by a second thickness that is sized differently than the first thickness. The first side portion and the second side portion comprise at least a third and a fourth surface respectively, that are suitable for contacting with the third face and the fourth face, respectively, in order to clamp the second bus bar.

## Description

The present description relates to a terminal for the connection to bus bars suitable for installation within a cabinet for an electrical switchboard.

As already known in the art electrical switchboards, also described by equivalent terms such as electrical panels or electrical cabinets or by similar definitions, for example electrical switchboards for the distribution of electrical energy or for automation, comprise a cabinet.

The cabinet defines an internal space for the housing of one or more electrical and/or electronic devices such as electrical switching devices, control or protection devices, current transformers, etc.

It is also known that amongst the elements housed within the cabinet there are conducting distribution bars (hereinafter "bus bars") which are used to distribute electrical energy to the electrical and/or electronic devices of the electrical switchboard itself.

In general, terminals are used for connecting to the bus bars in order to achieve an electrical connection between the bus bars themselves and the various electrical and/or electronic devices of the electrical switchboard.

In particular, terminals of the type known in the art comprise a conductive body having a slot; the slot comprises a bottom wall from which protrude transversely, spaced apart and facing each other, a first side portion and a second side portion. The slot further comprises an opening facing towards the bottom wall such as to allow for the insertion of a bus bar towards the bottom wall thereof.

In particular, the bus bar, generally of a flat type, comprises a first face and a second face spaced apart by the thickness of the bar itself, and its insertion into the slot takes place with the first face and the second face facing the first side portion and the second side portion, respectively, of the slot.

The first side portion and second side portion comprise only a first surface and a second surface, respectively, which are suitable for contacting with the first face and the second face, in order to clamp the bus bar.

According to this known solution, the terminal is only able to connect to a particular type of bus bar, i.e. to bus bars having the same thickness between the first face and the second face.

Therefore, whenever bus bars installed within a cabinet are replaced with other bus bars having a different thickness, also the corresponding terminals must be appropriately replaced with different terminals, in particular with terminals having first and second surfaces that are suitable for contacting and for clamping the new bars.

According to a known exemplary application, various electrical and/or electronic devices of the electrical switchboard are installed within the cabinet by means of one or more installation modules; the installation modules are generally configured as drawers that can be re-movably inserted into the cabinet, wherein electrical and/or electronic devices can be mounted.

For example, in the case of an electrical distribution switchboard for low voltage applications, i.e. for operating voltages up to 1kV, one or more electrical switching devices, such as circuit breakers and the various devices associated therewith such as transformers or multimeters, can be mounted on the installation module.

Each installation module comprises terminals, of the type known in the art and described above, which are connected to various electrical and/or electronic devices that are mounted within the installation module and which are suitable for connecting to corresponding bus bars of the cabinet.

Upon insertion of the installation modules within the cabinet, an electrical connection is thus established between the electrical and/or electronic devices and the respective bus bars.

However, if an installation module is first used to connect to a bus bar system having a certain thickness and that must subsequently be used to connect to a different bus bar system having a different thickness, it is then necessary to replace the terminals of the installation module or else to use a new installation module having different terminals of the known type which are suitable for connecting to and clamping the new bars.

According to the above description, to the state of the art, even if the known solutions perform their task in a reasonably satisfactory manner, there still remains good reason and the desire for further improvements.

This desire is satisfied by a terminal for the connection to bus bars suitable for being installed within an electrical switchboard cabinet. The terminal comprises a conductive body having a slot comprising:
- a bottom portion;
- a first side portion and a second side portion that protrude transversely from the bottom portion, spaced apart and facing each other; and
- an opening facing towards the bottom portion, through which a first bus bar can be inserted along the slot.

The first bus bar comprises at least a first face and a second face which are spaced apart by a first thickness. The first side portion and the second side portion comprise a first surface and a second surface, respectively, suitable for contacting the first face and the second face, respectively, in such a way as to clamp the first bus bar.

At least a second bus bar can be inserted along the slot through the opening; such a second bus bar comprising at least a third face and a fourth face spaced apart by a second thickness that is sized differently than the first thickness. The first side portion and the second side portion comprise at least a third and a fourth surface respectively, that are suitable for contacting with the third face and the fourth face, respectively, in such a way as to clamp the second bus bar.

A further aspect of the present description is that of providing a module for installing one or more electrical and/or electronic devices within an electrical switchboard cabinet; this module comprises at least one terminal as per the terminal defined in the appended claims and discussed in the following description.

A further aspect of the present description is to provide an electrical switchboard comprising at least one terminal and/or one installation module such as the terminal and the installation module defined in the appended claims and discussed in the following description.

Further characteristics and advantages will become clear from the description of some preferred but not exclusive embodiments of a terminal according to the present description, and related installation module and electrical switchboard, illustrated only by way of non-limiting example with the help of the accompanying drawings, wherein:
- figures 1 and 2 are a perspective view and a top view, respectively, of a terminal according to the present description;
- figures 3 and 4 are a perspective view and a top view, respectively, of the conductive body of the terminal illustrated in figures 1 and 2;
- figures 5 and 6 are top views of the coupling of the terminal illustrated in figures 1 and 2 to a first bus bar and a second bus bar, respectively, wherein the thickness of the first bus bar is greater than the thickness of the second bus bar.
- figures 7 and 8 illustrate a front perspective view and a rear perspective view, respectively, of an installation module according to the present description;
- figure 9 is a perspective view of an electrical switchboard cabinet, wherein a plurality of bus bars is installed together with an installation module according to the present description.

It should be emphasised that identical or equivalent elements, both from a structural and a functional point of view, will be indicated in the following description by the same numerical references, regardless of the fact that they are illustrated in the form of different embodiments.

It should also be emphasised, for the purposes of clarity and conciseness regarding the present description, that the drawings may not necessarily be to scale and that certain characteristics introduced in the description may be illustrated in the appended figures in a somewhat schematic manner.

Additionally, when the term "suitable", "configured" or "shaped" is used in the description where referring to each component considered as a whole, or to any part of the component, or to an entire combination of components, or even to each part of a combination of components, it is to be understood that this term means and correspondingly comprises both the structure, and/or configuration and/or shape and/or positioning of the relative component or part thereof, or the combination of components or part thereof, to which the term refers.

Finally, when the term "transverse" or "transversely" is employed in the following description it means a direction that is not parallel to the element or the direction to which said element refers, and the perpendicularity must be considered as a specific case of a transverse direction.

With reference to the above-mentioned figures, the present description relates to a terminal 1 for the connection to bus bars 100, 101 suitable for the installation within a cabinet 200 for an electrical switchboard, in order to distribute electrical energy to electrical and/or electronic devices of the electrical switchboard.

The terminal 1 comprises a conductive body 2, preferably made of a highly conductive material, such as copper.

The conductive body 2 comprises a slot 10, which in turn comprises:
- a bottom portion 11;
- a side portion 12 and a side portion 13 that extend transversely from the bottom portion 11, spaced apart and facing each other; and
- an opening 14 facing towards the bottom portion 11.

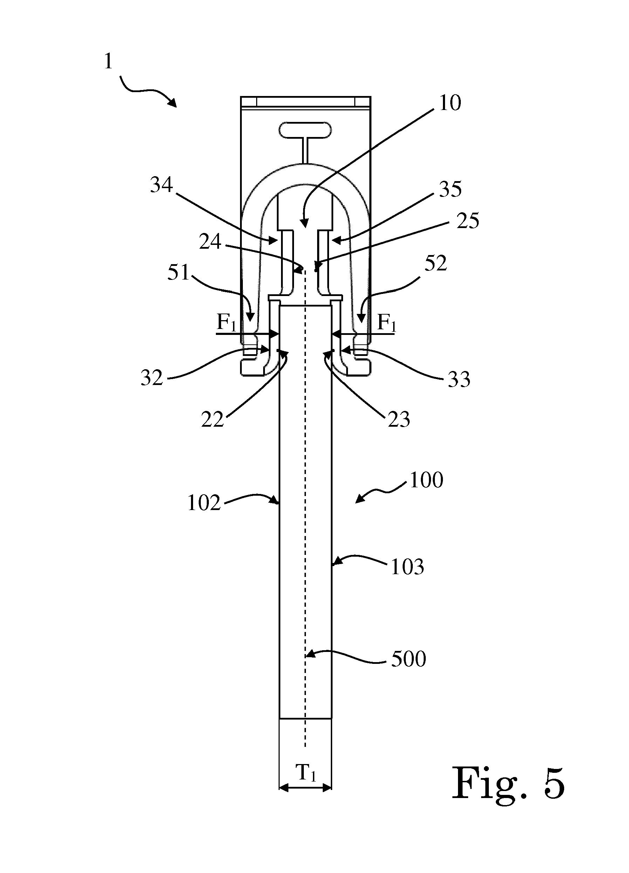

With reference to the example illustrated in figure 5, at least one bus bar 100 can be inserted along the slot 10 through the opening 14; such a bus bar 100 comprising at least a face 102 and a face 103, and having a thickness T₁ separating the faces 102 and 103.

In practice, the opening 14 is suitable for the removable insertion of the bus bar 100 along a respective portion of the slot 10, towards the bottom portion 11, so that the face 102 and the face 103 point towards the side portion 12 and the side portion 13, respectively.

The side portion 12 and the side portion 13 of the slot 10 comprise a surface 22 and a surface 23, respectively, which are suitable for contacting with the face 102 and the face 103, respectively, in order to clamp the bus bar 100.

In practice, the clamping produced by the contact between the surfaces 22 and 23 and the respective faces 102 and 103 of the bus bar 100 occurs along a direction that transversely links the first and second side portions 12 and 13 of the slot 10, i.e. along a direction that is transverse to the direction of insertion of the bus bar 100 within the slot 10. In particular, the bus bar 100 remains free to be removed from the slot 10 through the opening 14 between the side portions 12 and 13.

Preferably, the surfaces 22 and 23 are defined along the respective side portions 12 and 13 of the slot 10 with each facing towards the other.

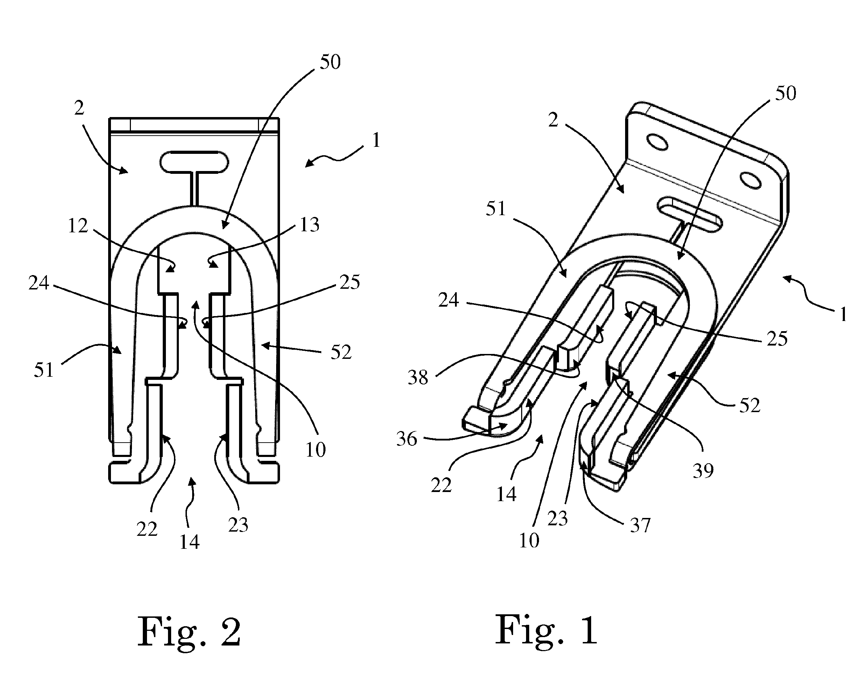

According to the example embodiment illustrated in figures 1-6, the conductive body 2 of the terminal 1 comprises a substantially flat portion 3. The conductive body 2 further comprises an edge 32 and an edge 33 having a thickness that is greater than the thickness of the flat portion 3.

These edges 32 and 33 are advantageously arranged with respect to the flat portion 3 in such a way as to define the surface 22 and the surface 23, respectively. Given that the edges 32 and 33 have a thickness that is greater than the flat portion 3, the surfaces 22 and 23 defined thereby have a greater contact area with respect to the bus bar 100, further improving the clamping of the bar 100.

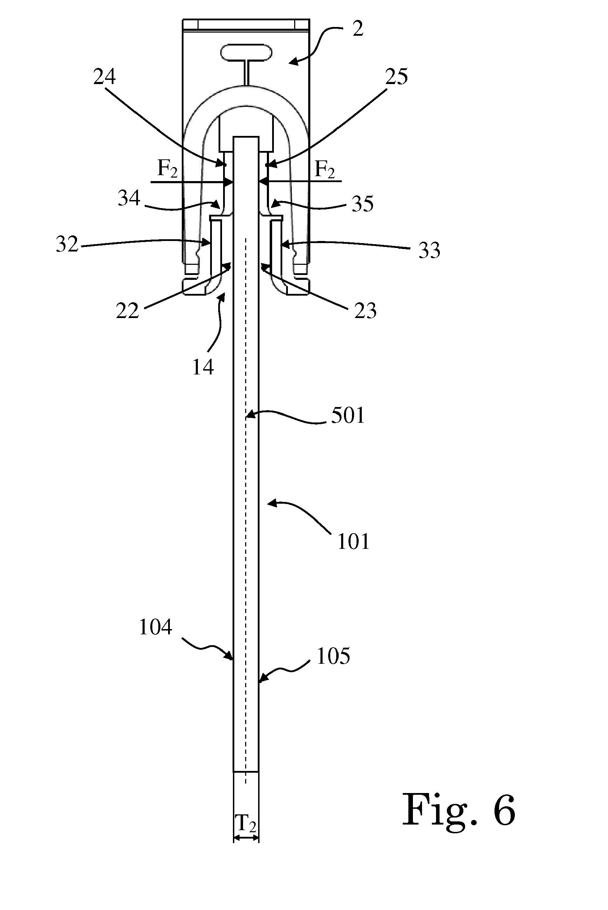

With reference to figure 6, at least one bus bar 101 can also be inserted along the slot 10 through the opening 14; such bus bar 101 comprises at least a face 104 and a face 105, and has a thickness T₂ that spaces apart the faces 104 and 105 and that is sized differently with respect to the thickness T₁ of the bus bar 100.

In practice, the opening 14 is also suitable for the removable insertion of the bus bar 101 along a respective portion of the slot 10, towards the bottom portion 11, such that the face 104 and the face 105 point towards the side portion 12 and the side portion 13, respectively.

The side portion 12 and the side portion 13 of the slot 10 advantageously comprise a surface 24 and a surface 25, respectively, which are suitable for contacting the face 104 and the face 105, respectively, in order to clamp the bus bar 101.

In practice, the clamping produced by the contact between the surfaces 24 and 25 and the respective faces 104 and 105 of the bus bar 101 occurs along a direction that transversely links the first and second side portions 12 and 13 of the slot 10, i.e. along a direction that is transverse to the direction of insertion of the bus bar 101 within the slot 10. In particular, the bus bar 101 remains free to be removed from the slot 10 through the opening 14 between the side portions 12 and 13.

Preferably, the surfaces 24 and 25 are defined along the respective side portions 12 and 13 of the slot 10 with each facing towards the other.

According to the example embodiment illustrated in figures 1-6, the conductive body 2 of the terminal 1 further comprises an edge 34 and an edge 35 that feature a thickness that is greater than the thickness of the flat portion 3.

These edges 34 and 35 are advantageously arranged with respect to the flat portion 3 in such a way as to define the surface 24 and the surface 25, respectively. Given that the edges 34 and 35 feature a thickness that is greater than the flat portion 3, the surfaces 24 and 25 thus defined feature a greater extent of contact area with respect to the bus bar 101, further improving the clamping of the bar 101. Preferably, the conductive body 2 of the terminal 1 is suitable for deforming itself due to the contact between the surfaces 22 and 23 with the respective faces 102 and 103 of the bus bar 100, or due to the contact between the surfaces 24 and 25 with the respective faces 104 and 105 of the bus bar 101.

For example, according to the embodiment illustrated in figures 1-6, the surfaces 22 and 23 are pointing towards each other and spaced apart in such a way that an insertion of the bus bar 100 between them, in order to cause their contact with the respective faces 102 and 103, causes a mutual moving away of the surfaces 22 and 23 and, therefore, of the portions 12 and 13 of the slot 10.

In the same way, the surfaces 24 and 25 are facing each other and spaced apart in such a way that an insertion of the bus bar 101 between them, in order to cause the contact with the respective faces 104 and 105, will induce a mutual moving away of the surfaces 24 and 25 and, therefore, of the portions 12 and 13 of the slot 10.

Given that the conductive body 2 has its own elasticity, it will produce a force in order to return to the resting configuration, such force is:
- in the case of its deformation being due to the insertion of the bus bar 100, directed toward the faces 102 and 103 of the bus bar 100 which is clamped between the surfaces 22 and 23; or
- in case of its deformation being due to the insertion of the bar 101, directed toward the faces 104 and 105 of the bus bar 101 which is clamped between the surfaces 24 and 25.

Preferably, an elastic element 50 is operatively coupled to the conductive body 2 in such a way as to undergo a first elastic deformation caused by the deformation of the conductive body 2 due to the contact between the surfaces 22 and 23 with the bus bar 100, or a second elastic deformation caused by the deformation of the conductive body 2 due to the contact between the surfaces 24 and 25 with the bus bar 101.

In addition, the elastic element 50 is operatively coupled to the conductive body 2 in such a way as to exert:
- an first clamping force acting on the bus bar 100 by means of the surfaces 22 and 23, caused by the first elastic deformation; or
- an second clamping force acting on the bus bar 101 by means of the surfaces 24 and 25, caused by the second elastic deformation.

With reference to figure 5, the first clamping force comprises two components (both illustrated in figure 5 with the reference F₁), one directed towards and acting upon the face 102 and the other directed towards and acting upon the face 103 of the bus bar 100 clamped between the surfaces 22 and 23.

In practice, this force contributes to the clamping of the bus bar 100.

With reference to figure 6, the second clamping force comprises two components (both illustrated in figure 6 with the reference F₂), one directed towards and acting upon the face 104 and the other directed towards and acting upon the face 105 of the bus bar 101 clamped between the surfaces 24 and 25.

In practice, this force contributes to the clamping of the bus bar 101.

According to the example embodiment illustrated in figure 5, the bus bar 100 which can be inserted through the opening 14, is flat, and has a longitudinal extension along a main axis 500. The face 102 and the face 103 are the surfaces with the greatest extension of the bus bar 100 extending parallel to each other along the main axis 500, and the thickness T₁ corresponds to the distance between these faces 102 and 103.

According to the example embodiment illustrated in figure 6, also the bus bar 101 which can be inserted through the opening 14 is flat, and has a longitudinal extension along a main axis 501. The face 104 and the face 105 are the surfaces with the greatest extension of the bus bar 100 extending parallel to each other along the main axis 501, and the thickness T₂ corresponds to the distance between these faces 104 and 105.

The thickness T₂ is less than the thickness T₁; for example, the thickness T₁ of the flat bus bar 100 illustrated in figure 5 and the thickness T₂ of the flat bus bar 101 illustrated in figure 6 may have a size of 10mm and 5mm respectively.

Given that the thickness T₂ is less than the thickness T₁, the cross-section with respect to the main axis 501 of the flat bus bar 101 is less than the cross-section with respect to the main axis 500 of the bus bar 100. The bus bar 100 is therefore sized to carry a greater nominal operating current greater than the bus bar 101.

With reference to the exemplary terminal 1 illustrated in figures 1-6, the surface 24 is positioned along the slot 10 between the bottom portion 11 and the surface 22, while the surface 25 is arranged along the slot 10 between the bottom portion 11 and the surface 23.

In other words, the surfaces 24 and 25 are defined along the respective side portions 12 and 13 closer to the bottom portion 11 with respect to the surfaces 22 and 23, which are instead arranged closer to the opening 14 of the slot 10.

In the example embodiment illustrated in figures 1-6, the edges 32 and 33 protrude from the flat portion 3 of the conductive body 2 in such a way as to define the corresponding surfaces 22 and 23 facing one another.

The edge 34 protrudes with respect to the flat portion 3 at the side portion 12 of the slot 10, and is arranged between the bottom portion 11 and the edge 32; the edge 35 protrudes with respect to the flat portion 3 at the side portion 13 of the slot 10, and is arranged between the bottom portion 11 and the edge 33. In particular, the edges 34 and 35 protrude with respect to the flat portion 3 in such a way as to define the corresponding surfaces 24 facing one another. Preferably, the conductive body 2 of the terminal 1 is manufactured as a single piece, wherein the edges 32, 33, 34 and 35 are portions that are bent, during manufacture, with respect to the flat portion 3. Preferably, the edge 32 and the edge 33 comprise an end 36 and an end 37, respectively, having a curved portion to facilitate the insertion of the bus bar 100 into the slot 10, between the surfaces 22 and 23. Preferably the edge 34 and the edge 35 comprise an end 38 and an end 39, respectively, having a curved portion to facilitate the insertion of the bus bar 101 into the slot 10, between the surfaces 24 and 25. With reference to figure 5, the illustrated flat bus bar 100 can therefore be inserted in the slot 10 through the opening 14, along an initial section of the slot 10, between the opening 14 and the edges 34 and 35.

The surfaces 22 and 23 are defined by the edges 32 and 33 in such a way that, during insertion along the slot 10, the bus bar 100 is inserted between surfaces 22 and 23.

In particular, the surfaces 22 and 23 are suitable for contacting in a sliding manner with the respective faces 102 and 103 of the bus bar 100, during insertion between them of such a bus bar 100.

Furthermore, once such insertion is complete, the surfaces 22 and 23 are suitable for remaining into contact with the faces 102 and 103, so as to clamp the bus bar 100 inserted between them along a direction that transversely links the surfaces 22 and 23.

In the example embodiment illustrated in figures 1-6, the terminal 1 comprises, as an elastic element 50, a spring 50 of a substantially "U" shape, having two side portions 51 and 52.

This spring 50 is operatively coupled to the flat portion 3 of the conductive body 2 in such a way that the side portions 12 and 13 of the slot 10 are arranged between the side portions 51 and 52 of the spring 50.

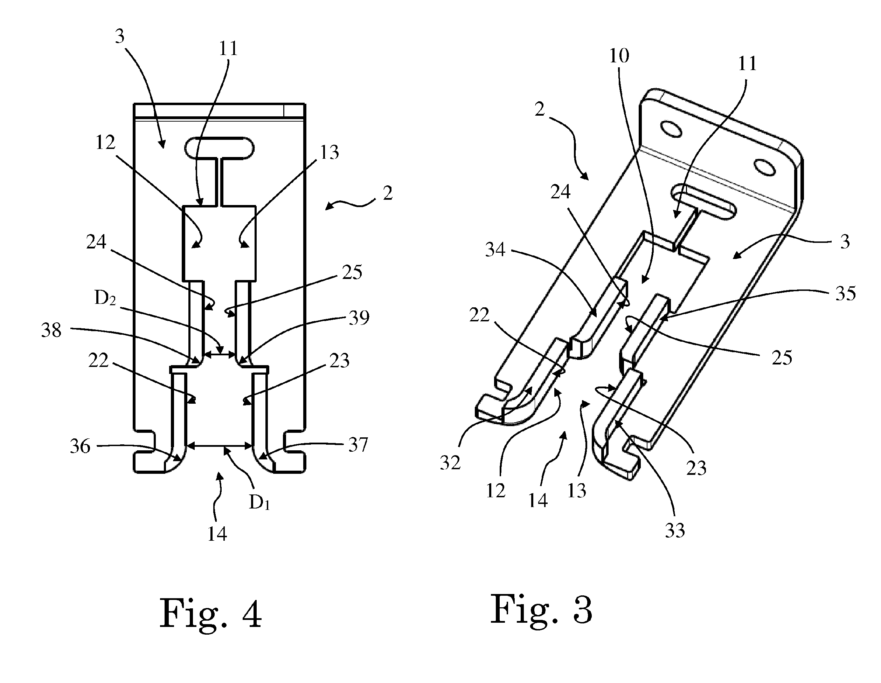

The minimum distance D₁ between the surfaces 22 and 23 (illustrated for example in figure 4) is such that contact between the faces 102 and 103 of the bus bar 100 with the respective surfaces 22 and 23 causes the deformation of the conductive body 2; in particular, the minimum distance D₁ is sized in such a way as to be slightly less than the thickness T₁ of the bus bar 100. For example, for a bus bar 100 having a thickness T₁ of 10 mm, the minimum distance D₁ could be sized in such a way as to be equal to around 9.8 mm.

The deformation of the conductive body 2 is such that the side portions 12 and 13 of the slot 10 move apart and, therefore, the side portions 51 and 52 of the spring 50 also move apart.

In this way, as shown in figure 5, the deformed spring 50 is suitable for applying, by means of the surfaces 22 and 23, the two components F₁ of the clamping force against the bus bar 100.

With reference to figure 6, the illustrated flat bus bar 101 can be inserted into the slot 10 through the opening 14, proceeding beyond the initial section which is accessible to the bus bar 100, in order to reach and insert between the surfaces 24 and 25 defined by the edges 34 and 35.

In particular, the surfaces 24 and 25 are suitable for contacting in a sliding manner with the respective faces 104 and 105 of the bus bar 101, during insertion between them of such a bus bar 101.

Furthermore, once such insertion is complete, the surfaces 24 and 25 are suitable for remaining into contact with the faces 104 and 105, so as to clamp the bus bar 101 inserted between them along a direction that transversely links the surfaces 24 and 25.

The minimum distance D₂ between the surfaces 24 and 25 (illustrated for example in figure 4) is such that contact between the faces 104 and 105 of the bus bar 101 with the respective surfaces 24 and 25 causes the deformation of the conductive body 2; in particular, the minimum distance D₂ is sized in such a way as to be slightly less than the thickness T₂ of the bus bar 101. For example, for a bus bar 101 having a thickness T₂ of 5 mm, the minimum distance D₂ could be sized in such a way as to be equal to around 4.8 mm.

The deformation of the conductive body 2 is such that the side portions 12 and 13 of the slot 10 move apart and, therefore, the side portions 51 and 52 of the spring 50 also move apart.

In this way, as shown in figure 6, the deformed spring 50 is suitable for applying, by means of the surfaces 24 and 25, the two components F₂ of the clamping force against the bus bar 101.

The connection between the terminal 1 shown in figures 1-6 and the flat bus bars 100 and 101 illustrated in figures 5 and 6 is briefly described below.

Considering the connection of the terminal 1 with the bus bar 100, the bus bar 100 enters into the slot 10 through the opening 14 and is inserted between the surfaces 22 and 23 of the edges 32 and 33, until reaching a final position within the slot 10, such as the final position illustrated for example in figure 5.

During movement of the bus bar 100 between the surfaces 22 and 23, a sliding contact occurs between the surfaces 22 and 23 and the respective faces 102 and 103 of the bar 100.

Given that the minimum distance D₁ between the surfaces 22 and 23 is sized in such a way as to be less than the thickness T₁ of the bus bar 100, this sliding contact gives causes:
- a deformation of the conductive body 2 which then results in a reciprocal moving away of the side portions 12 and 13 of the slot 10; and
- a corresponding elastic deformation of the spring 50 which then results in a reciprocal moving away of its side portions 51 and 52.

Taking into account the final position shown in figure 5, the bus bar 100 is clamped between the surfaces 22 and 23 of the edges 32 and 33, and the surfaces 22 and 23 remain in contact with the respective faces 102 and 103.

The side portions 51 and 52 of the elastically deformed spring 50 apply a force for returning the spring 50 itself, together with the conductive body 2 of the terminal 1, to their respective resting positions. In particular, the side portions 51 and 52, by means of the surfaces 22 and 23, apply the components of the force F₁ which, as illustrated in figure 5, are directed in such a way as to contribute to the clamping of the bus bar 100 between the surfaces 22 and 23.

The terminal 1 can then be moved with respect to the clamped bus bar 100, in such a way that the surfaces 22 and 23 lose contact with the respective faces 102 and 103 of the bus bar 100.

Upon such a loss of contact, the spring 50 and the conductive body 2 of the terminal 1 return to their respective resting positions. At this point, the same terminal 1 can be re-connected to a corresponding bus bar 100 or 101.

For example, the terminal 1 can be connected to the bus bar 101 having a thickness T₂ which is less than the thickness T₁ of the bus bar 100.

In particular, the bus bar 101 enters into the slot 10 through the opening 14 and is inserted between the surfaces 24 and 25 of the edges 34 and 35, until reaching a final position within the slot 10, such as the final position illustrated for example in figure 6.

During movement of the bus bar 101 between the surfaces 24 and 25, a sliding contact occurs between the surfaces 24 and 25 and the respective faces 104 and 105 of the bar 101.

Given that the minimum distance D₂ between the surfaces 24 and 25 is sized in such a way as to be less than the thickness T₂ of the bus bar 101, this sliding contact gives rise to:
- a deformation of the conductive body 2 which then results in a mutual moving away of the side portions 12 and 13 of the slot 10; and
- a corresponding elastic deformation of the spring 50 which then results in a reciprocal moving away of the associated side portions 51 and 52.

Taking into account the final position shown in figure 6, the bus bar 101 is clamped between the surfaces 24 and 25 of the edges 32 and 33, and the surfaces 34 and 35 remain in contact with the faces 104 and 105.

The side portions 51 and 52 of the elastically deformed spring 50 apply a force for returning the spring 50 itself, together with the conductive body 2 of the terminal 1, to their respective resting positions. In particular, the side portions 51 and 52, by means of the surfaces 24 and 25, apply the components of the force F₂ which, as illustrated in figure 6, are directed in such a way as to contribute to the clamping of the bus bar 101 between the surfaces 24 and 25.

The terminal 1 can then be moved with respect to the clamped bus bar 100, in such a way that the surfaces 24 and 25 lose contact with the respective faces 104 and 105 of the bus bar 101. Upon such a loss of contact, the spring 50 and the conductive body 2 of the terminal 1 return to their respective resting positions.

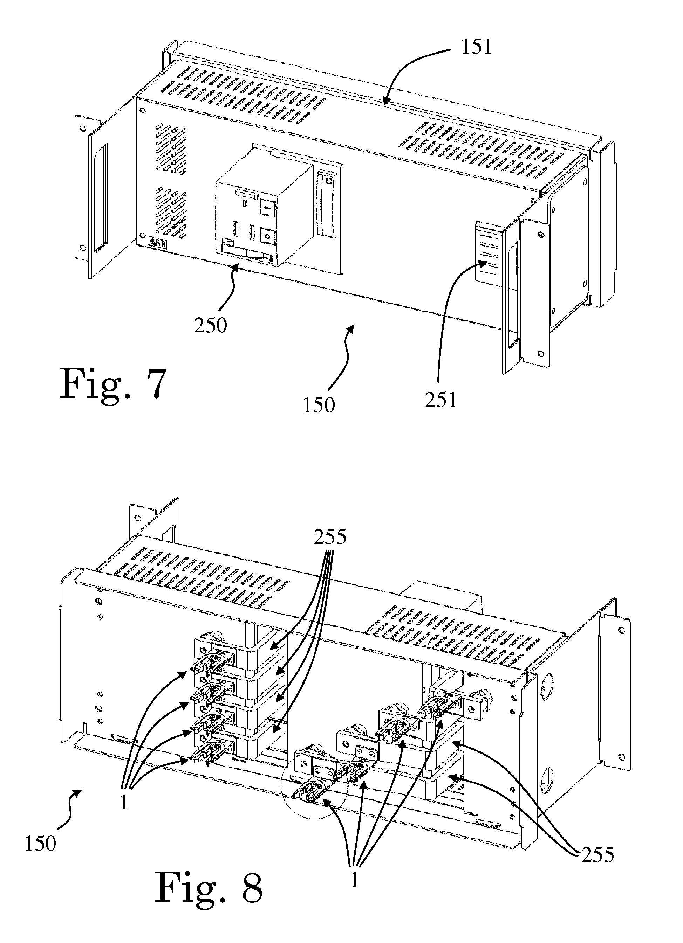

With reference to figures 7 and 8, the present description also relates to a module 150 for the installation of one or more electrical and/or electronic devices 250, 251 within a cabinet 200 for an electrical switchboard. This installation module 150 comprises at least one terminal 1 as previously described and claimed in the appended claims.

In practice, the installation module 150 is suitable for electrically connecting one or more electrical and/or electronic devices 250, 251 thereon operatively mounted to the respective bus bars 100, 101 installed within the cabinet 200.

For this purpose, the installation module 150 comprises one or more terminals 1 which are connected to the electrical and/or electronic devices 250, 251 and which can be connected, according to the previous description, to the respective bus bars 100, 101.

In this way, using the terminals 1 of the installation module 150, a plug-in type electrical connection can be obtained between the electrical and/or electronic devices 250, 251 and the bus bars 100, 101.

According to the example embodiment illustrated in figures 7 and 8, the installation module 150 is in practice configured as a drawer 150 having a bottom wall 151 wherein one or more electrical and/or electronic components 250, 251 are mounted.

For example, the example installation module 150 illustrated in figures 7 and 8 is designed to be installed within the cabinet 200 of a low voltage distribution electrical switchboard, and on its bottom wall 251 there are operatively connected at least one circuit breaker 250 and one digital multimeter 251.

With reference to figure 8, the circuit breaker 250 and the digital multimeter 251 are connected, via connection means 255, to terminals 1 of the type previously described and illustrated in figures 1-6.

These terminals 1 are accessible from the rear with respect to the bottom wall 151, in such a way as to connect to the respective bus bars 100 or 101, upon the insertion of the installation module 150 within the cabinet 200.

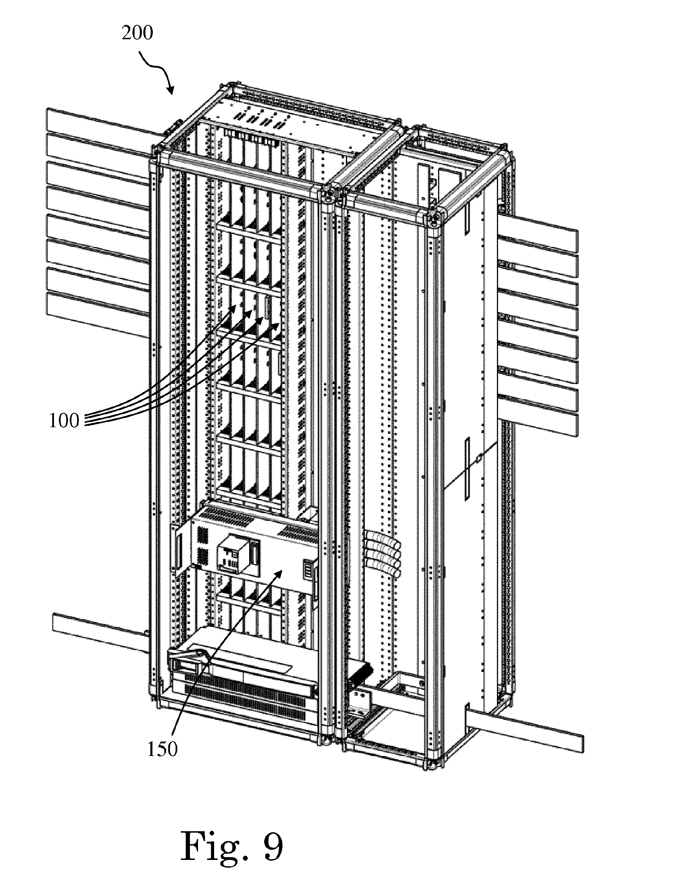

For example, figure 9 illustrates a cabinet 200 for a low-voltage electrical switchboard within which a plurality of bus bars 100 is installed, such as the bus bar 100 illustrated in figure 5.

Figure 9 also illustrates the installation module 150 of figures 7 and 8 which is inserted within the cabinet 200 in such a way that each of its terminals 1 is connected to one of the respective bars 100, according to the description given above.

However each of the terminals 1 of the installation module 150 can also be connected to a respective bus bar 101, having a thickness T₂ which is less than the thickness T₁ of the bus bar 100, as previously described.

In practice, it has been shown that the terminal 1 according to the present description allows the desired goal to be achieved by offering various improvements when compared with known solutions.

In particular, the terminal 1 is suitable for connecting to and clamping bus bars 100, 101 featuring differently sized thicknesses T₁ and T₂ respectively.

Therefore, when the bus bars 100 installed within the cabinet 200 are replaced with the bus bars 101 having a different thickness, given that they are able to connect to and clamp the new bus bars 101, the terminals 1 already used for the bus bars 100 do not then need to be replaced.

In this way, the terminal 1 achieves greater versatility in use which implies a series of advantages, amongst which are the following:
- avoiding additional costs and difficulties owing to replacement of the terminal 1; and
- the reuse of the same terminal 1 within a cabinet having differently sized bus bars.

For example, considering the installation module 150 previously described, thanks to the presence of the terminals 1 such a module 150 may advantageously:
- continue to be used within the cabinet 200 without the need to replace its terminals 1 in such a case as when the bus bars 100 are replaced with the bus bars 101; or
- be used in another cabinet in which bus bars 101 are installed. The terminal 1, the installation module 150, and the relative electrical switchboards are susceptible to modifications and variations all of which fall within the scope of the inventive concept as defined in particular by the appended claims.

In the example embodiment illustrated in figures 1-6, the terminal 1 comprises only:
- the surfaces 22 and 23 which are suitable for contacting the respective faces 102 and 103 in such a way as to clamp the bus bar 100; and
- the surfaces 24 and 25 which are suitable for contacting the respective faces 104 and 105 in such a way as to clamp the bus bar 101.

In practice, the terminal 1 illustrated in figures 1-6 is suitable for contacting and clamping only two types of bars 100, 101 having differently sized thicknesses T₁ and T₂ respectively.

For example, the side portion 12 and the side portion 13 of the slot 10 of the terminal 1 may comprise at least an additional first surface and an additional second surface, respectively, which are suitable for contacting the opposite faces of an additional bus bar that can be inserted along the slot 10 through the opening 14, in such a way as to clamp this additional bus bar.

In particular, these opposite faces of the additional bus bar would be spaced apart by a thickness that is sized differently with respect to the thicknesses T₁ and T₂ of the bus bars 100 and 101.

For example, the first additional surface could be defined along the side portion 12 of the slot 10 in such a way as to be arranged between the bottom portion 11 and the surface 24, and the second additional surface could be defined along the side portion 13 in such a way as to be arranged between the bottom portion 11 and the surface 25. In this case, the first and second additional surfaces are defined in such a way as to come in to contact with and clamp a bus bar having a thickness which is less than the thicknesses T₁ and T₂ of the bus bars 100 and 101.

Alternatively, the first additional surface could be defined along the side portion 12 of the slot 10 in such a way that the surface 22 may be positioned between the surface 24 and the additional first surface, and the second additional surface could be defined along the side portion 13 in such a way that the surface 23 may be positioned between the surface 25 and the additional second surface. In this case, the first and second additional surfaces are defined in such a way as to come into contact with and clamp a bus bar having a thickness that is greater than the thicknesses T₁ and T₂ of the bus bars 100 and 101.

In this way, the terminal 1 is suitable for contacting and clamp three types of bars each having different thicknesses.

In practice, the terminal 1 according to the present description is suitable for contacting and clamping a plurality of bars having different thicknesses between them, as far as for each bar of this plurality a pair of surfaces is defined along the side portions 12, 13 of the slot 10, each pair of surfaces being suitable for contacting and clamping the opposite faces of the bar.

Although in the example embodiment illustrated in figures 1-6, the edges 32, 33, 34 and 35 have an equally sized thickness, one or more of these edges 32-35 may be sized differently with respect to the others; for example, the edges 32 and 33 which define the surfaces 22 and 23 may have a thickness which is sized differently in comparison to the thicknesses of the edges 34 and 35 which define the surfaces 24 and 25.

In addition, all of the parts/components described can be replaced with other technically equivalent parts/components; in practice, the type of materials, and the dimensions thereof, may be any according to the requirements and the state of the art.

## Claims

1. A terminal (1) for the connection to bus bars (100, 101) suitable for being installed within a cabinet (200) for an electrical switchboard, said terminal (1) comprising a conductive body (2) having a slot(10) which comprises:
- a bottom portion (11);
- a first side portion (12) and a second side portion (13) protruding transversely from said bottom portion (11), spaced apart and facing each other; and
- an opening (14) facing towards said bottom portion (11), through which a first bus bar (100) can be inserted along the slot (10), said first bus bar (100) comprising at least a first face (102) and a second face (103) spaced apart by a first thickness (T₁) ;
said first side portion (12) and said second side portion (13) comprising a first surface (22) and a second surface (23), respectively, which are suitable for contacting said first face (102) and said second face (103), respectively, in such a way as to clamp the first bus bar (100), **characterized in that** at least a second bus bar (101) can be inserted along the slot (10) through said opening (14), said second bus bar (101) comprising at least a third face (104) and a fourth face (105) spaced apart by a second thickness (T₂) which is sized differently with respect to said first thickness (T1), said first side portion (12) and said second side portion (13) comprising at least a third surface (24) and a fourth surface (25), respectively, which are suitable for contacting said third face (104) and said fourth face (105), respectively, in such a way as to clamp the second bus bar (101).

2. Terminal (1) according to claim 1, wherein said conductive body (2) comprises a substantially flat portion (3), and a first edge (32) and a second edge (33) having a thickness greater than the thickness of said substantially flat portion (3), said first edge (32) and said second edge (33) being arranged with respect to the substantially flat portion (3) in such a way as to define said first surface (22) and said second surface (23), respectively.

3. Terminal (1) according to claim 2, wherein said conductive body (2) further comprises a third edge (34) and a fourth edge (35), respectively, having a thickness greater than the thickness of said substantially flat portion (3), said third edge (34) and said fourth edge (35) being arranged with respect to the substantially flat portion (3) in such a way as to define said third surface (24) and said fourth surface (25), respectively.

4. A terminal (1) according to claim 3, wherein said conductive body (2) is manufactured as a single piece, and wherein said first, second, third and fourth edges (32, 33, 34, 35) are portions that are bent with respect to the substantially flat portion (3).

5. A terminal (1) according to one or more of the preceding claims, wherein said first and second surfaces (22, 23) are arranged in such a way that they face each other.

6. A terminal (1) according to one or more of the preceding claims, wherein said third and fourth surfaces (24, 25) are arranged in such a way that they face each other.

7. A terminal (1) according to one or more of the preceding claims, wherein said conductive body (2) is suitable for undergoing:
- a first deformation caused by the contact between said first surface (22) and said second surface (23) with said first face (102) and said second face (103), respectively; or
- a second deformation caused by the contact between said third surface (24) and said fourth surface (25) with said third face (104) and said fourth face (105), respectively.

8. A terminal (1) according to claims 5 and 7, wherein the minimum distance (D₁) between said first and second surfaces (22, 23) is such that the contact between said first surface (22) and said second surface (23) with said first face (102) and said second face (103), respectively, causes said first deformation of the conductive body (2).

9. A terminal (1) according to claims 6 and 7, wherein the minimum distance (D₂) between said third and fourth surfaces (24, 25) is such that the contact between said third surface (24) and said fourth surface (25) with said third face (104) and said fourth face (105), respectively, causes said second deformation of the conductive body (2).

10. A terminal (1) according to one or more of claims 7-9, wherein an elastic element (50) is operatively coupled to said conductive body (2) in such a way as to:
- undergo a first elastic deformation caused by said first deformation of the conductive body (2), or to undergo a second elastic deformation caused by said second deformation of the conductive body (2); and
- to apply a first clamping force (F₁) acting on said first bus bar (100) by means of said first and second surfaces (22, 23) owing to said first elastic deformation, or to apply a second clamping force (F₂) acting on said second bus bar (101) by means of said third and fourth surfaces (24, 25) owing to said second elastic deformation.

11. A module (150) for the installation of one or more electrical and/or electronic devices (250, 251) within a cabinet (200) for an electrical switchboard, **characterized in that** it comprises at least one terminal (1) according to one or more of the preceding claims.

12. An electrical switchboard comprising at least one terminal (1) according to one or more of claims 1-10 and/or a module (150) according to claim 11.
